(19) **Europäisches Patentamt / European Patent Office / Office européen des brevets**

(11) **EP 4 685 518 A1**

(12) **EUROPEAN PATENT APPLICATION**

(43) Date of publication:
**28.01.2026  Bulletin 2026/05**

(21) Application number: **24190996.9**

(22) Date of filing: **25.07.2024**

(51) International Patent Classification (IPC):
**G01S 7/4915** *(2020.01)*      **G01S 17/36** *(2006.01)*
**G01S 17/894** *(2020.01)*      **G01S 7/497** *(2006.01)*

(52) Cooperative Patent Classification (CPC):
**G01S 7/4915; G01S 7/497; G01S 17/36; G01S 17/894**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies AG**
**85579 Neubiberg (DE)**

(72) Inventor: **LEITNER, Raimund**
**9500 Villach (AT)**

(74) Representative: **2SPL Patentanwälte PartG mbB**
**Landaubogen 3**
**81373 München (DE)**

(54) **APPARATUS AND METHOD, APPARATUS AND METHOD FOR DETERMINING A REFERENCE VALUE INDICATING A PARALLAX AND TIME-OF-FLIGHT SYSTEM**

(57)    Proposed is an apparatus comprising processing circuitry configured to determine at least one value characterizing a parallax caused by a spacing between a light source and an imager of a ToF camera based on measurement data of a ToF measurement performed by the ToF camera and at least one reference value indicating the parallax. The processing circuitry is configured to determine an updated distance value for a determined provisional distance value for the ToF measurement based on the determined at least one value characterizing the parallax.

## FIG. 1

100

EP 4 685 518 A1

## Description

### Field

The present disclosure relates to time-of-flight (ToF) measurements. Examples relate to an apparatus and a method, an apparatus and a method for determining a reference value indicating a parallax caused by a spacing between an imager and a light source of a time-of-flight camera and a time-of-flight system.

### Background

Conventional time-of-flight cameras measure the distance between the camera and the environment in each pixel using a modulated light source and determining the phase caused by the time the light needs to travel from the light source to the object and back to the camera. The higher the modulation frequency, the higher the achievable depth precision, but a higher modulation frequency lowers the measurement range (unambiguity range). To overcome this limitation multiple modulation frequencies are used in order to resolve the ambiguity by combining several time-of-flight measurements with modulation frequencies with specific ratios to unwrap the measured phases. However, this may increase the power consumption and increase the measurement duration of a time-of-flight camera.

Hence, there may be a demand for an improved time-of-flight measurement approach.

### Summary

This demand is met by the subject-matter of the independent claims. Advantageous embodiments are addressed by the dependent claims.

According to a first aspect, the present disclosure provides an apparatus comprising processing circuitry configured to determine at least one value characterizing a parallax caused by a spacing between a light source and an imager of a ToF camera based on measurement data of a ToF measurement performed by the ToF camera and at least one reference value indicating the parallax. The processing circuitry is further configured to determine an updated distance value for a determined provisional distance value for the ToF measurement based on the determined at least one value characterizing the parallax.

According to a second aspect, the present disclosure provides an apparatus for determining at least one reference value indicating a parallax caused by a spacing between a light source and an imager of a ToF camera. The apparatus comprises processing circuitry configured to determine the at least one reference value based on a reference measurement performed by the ToF camera with at least one distance. Additionally, the apparatus comprises memory configured to store data indicating the at least one reference value.

According to a third aspect, the present disclosure provides a method comprising determining at least one value characterizing a parallax caused by a spacing between a light source and an imager of a ToF camera based on measurement data of a ToF measurement performed by the ToF camera and at least one reference value indicating the parallax. The method further comprises determining an updated distance value for a determined provisional distance value for the ToF measurement based on the determined at least one value characterizing the parallax.

According to a fourth aspect, the present disclosure provides a method for determining at least one reference value indicating a parallax caused by a spacing between a light source and an imager of a ToF camera. The method comprises determining the at least one reference value based on a reference measurement performed by the ToF camera with at least one distance. Additionally, the method comprises storing data indicating the at least one reference value.

According to a fifth aspect, the present disclosure provides a ToF system comprising an apparatus according to the first aspect and the ToF camera. The ToF camera is configured to perform the ToF measurement by radiating light to a scene by the light source and receiving a reflection of the light by the imager.

According to a sixth aspect, the present disclosure provides a non-transitory machine-readable medium having stored thereon a program having a program code for performing the method according to one of the third aspect and the fourth aspect, when the program is executed on a processor or a programmable hardware.

According to a seventh aspect, the present disclosure provides a program having a program code for performing the method according to one of the third aspect and the fourth aspect, when the program is executed on a processor or a programmable hardware.

### Brief description of the Figures

Some examples of apparatuses and/or methods will be described in the following by way of example only, and with reference to the accompanying figures, in which

Fig. 1 illustrates an example of an apparatus for determining an updated distance value;

Fig. 2 illustrates an example of a ToF camera;

Fig. 3 illustrates another example of a ToF camera;

Fig. 4a and Fig. 4b illustrate examples of amplitude distributions over a plurality of pixels;

Fig. 5 illustrates an example of a plurality of amplitude sub-distributions over a plurality of pixels;

Fig. 6a, Fig. 6b and Fig. 6c illustrate an example of a depth map of spot illumination, an image reconstructed from the depth map and an image of the captured scene, respectively;

Fig. 7 illustrates an example of a value characterizing a parallax and its relation to distance values;

Fig. 8 illustrates an example of an apparatus for determining a reference value;

Fig. 9 illustrates an example of a ToF system;

Fig. 10 illustrates an example of a method for determining an updated distance value;

Fig. 11 illustrates an example of a method for determining a reference value;

Fig. 12 illustrates an example of a table defining distance intervals; and

Fig. 13 illustrates another example of a table defining distance intervals.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

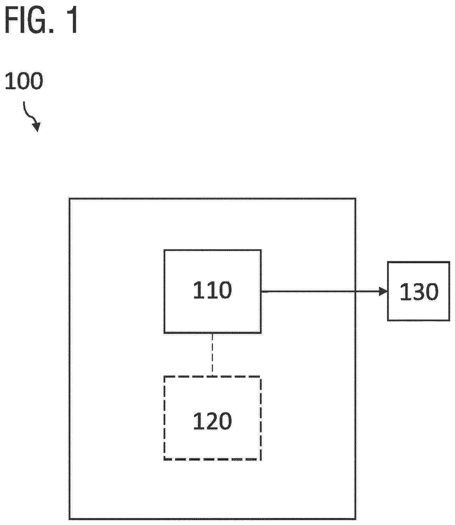

**Fig. 1** illustrates an example of an apparatus 100. The apparatus 100 comprises processing circuitry 110 and optionally interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110. The interface circuitry 120 may optionally be configured to establish a (e.g., wired or wireless) communicative coupling to a ToF camera (or ToF sensor) or to a data storage storing measurement data indicating a measurement of the ToF camera.

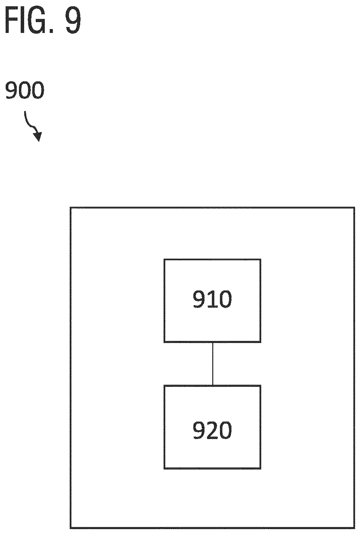

The apparatus 100 may be external to the ToF camera and communicatively coupled to it or to said data storage. Alternatively, the apparatus 100 may be (e.g., partially or fully) integrated into the ToF camera. The apparatus 100 may be part of a ToF system comprising the ToF camera, such as explained below with reference to Fig. 9. In case, the apparatus 100 is integrated into the ToF camera, the apparatus 100 may dispense with the interface circuitry 120.

The interface circuitry 120 may be any device or means for communicating or exchanging data. For instance, the interface circuitry 120 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

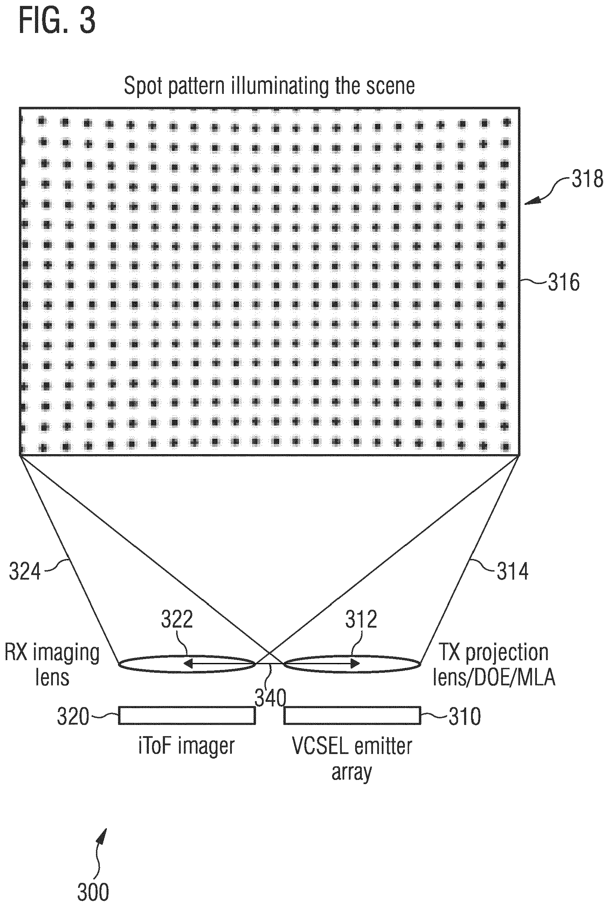

The ToF camera is a type of imaging device that utilizes a ToF technology to capture depth (distance) information about a scene or objects within it. The ToF camera comprises a light source and an imager. The light source is configured to radiate light (e.g., infrared light) to the scene. The light source may, for instance, emit a light pulse or modulated light or continuous wave of light. The light source may comprise one or more laser diode, LED (light emitting diode) or VCSEL (vertical cavity surface emitting laser) for emitting the light, for instance. The light source may comprise an array of light-emitting components. In some examples, the light source may be configured to generate multiple spots of light and illuminate the scene with a spot pattern. Other patterns than spot grids, regular lines are also possible. For example, the light source may comprise lenses and/or other optical components to shape (e.g., collimate or focus) the light in a spot pattern, as explained below with reference to Fig. 3.

The imager comprises any photo-sensitive component, e.g., one or more photo diodes, charge-coupled device (CCD), complementary metal-oxide-semiconductor (CMOS), photonic mixing device (PMD) or avalanche photodiode (APD). In this manner, the imager is configured to receive a reflection of the light. The imager may, for instance, comprise an array of multiple photo-sensitive components (pixels). The imager may generate an electrical signal for light impinging on it, indicating the received reflection (e.g., its direction, intensity and/or phase). In case of a direct ToF technology, the imager may directly measure the time it takes for the light (e.g., a light pulse) to travel from the light source to an object and back. In case of an indirect ToF technology, the imager may measure a phase shift between the emitted light and the received reflection, and derive the time of flight and the distance from the phase shift.

The ToF camera is configured to determine a provisional distance value based on a ToF measurement. The ToF measurement may refer to the measurement of values of the above mentioned electrical signal for one or more emitted light pulses or within a predefined time. The provisional distance is determined based on ToF principles, e.g., by directly or indirectly measuring the time of flight from the emission of the light until reception of a reflection thereof and deriving a distance from the measured time. The ToF measurement may be indicated by ToF measurement data, e.g., image data. For instance, the measured values may be sampled and converted into digital data, e.g., a data matrix. The measurement data may further have a data structure indicating a spatial distribution of measured light amplitude values over a plurality of pixels, which may correspond to a spatial distribution of received light over an image plane of the ToF camera. The plurality of pixels correspond to discrete units of visual information of the measurement data.

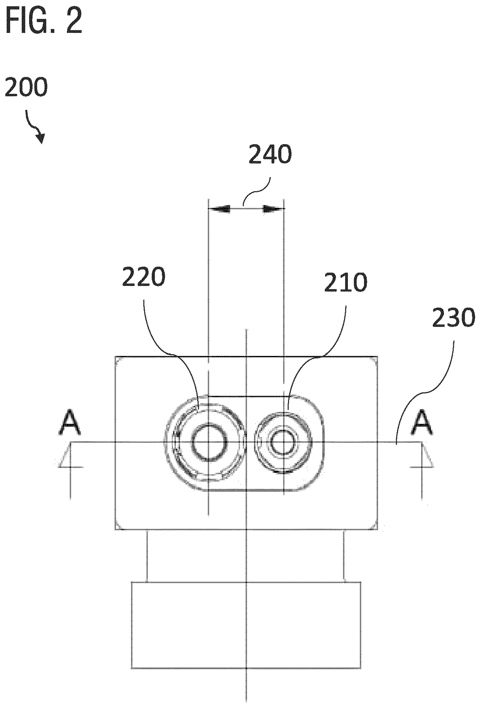

An example of a ToF camera 200 is illustrated by **Fig. 2.** The ToF camera 200 comprises a light source 210 arranged next to an imager 220, both with a round shaped aperture. The light source 210 and the imager 220 are spaced apart each other along a horizontal axis 230. This results in a horizontal spacing 240 or baseline between the light source 210 and the imager 220. The spacing 240 in Fig. 2 is the distance between the respective optical centers of the round shaped apertures of the light source 210 and the imager 220. The light source 210 may comprise one or more of diffractive optical elements (DOEs), micro-lens arrays (MLAs), meta-optical surfaces and lens(es). The spacing 240 may have a value of, e.g., 2, 4 or 10 millimeter. It may have a value of 4,5 millimeters in some examples or up to several centimeters for larger cameras, or even meters for satellite/air-borne/space-borne systems.

The shape, size and arrangement of the light source 210 and the imager 220 of Fig. 2 is meant for illustrative purposes only. For instance, the light source 210 and the imager 220 may alternatively be arranged along a vertical axis, or have a rectangular shape.

Another example of a ToF camera 300 is illustrated by **Fig. 3.** The ToF camera 300 comprises a light source 310. In the example of Fig. 3, the light source 310 comprises an array of VCSELs. The ToF camera 300 further comprises an imager 320. In the example of Fig. 3, the imager 320 is an iToF (indirect ToF) imager. The light source 310 is arranged next to the imager 320, yielding a spacing 340 between the respective optical centers.

The light source 310 is configured to emit light 314 to a scene 316 (in this case for example a flat surface). The ToF camera 300 further comprises a first optical element 312 arranged in an emit path of the ToF camera 300, e.g., in front of the light source 310. The first optical element 312 comprises at least one of a (Tx) projection lens, a DOE or an MLA in order to generate a spot pattern illumination of the scene 316. The spot pattern illumination is a generation of multiple light spots 318 in the scene 316 with a predefined distance to each other.

Such a "spot iToF system" like the camera 300 may reduce power budget constraints decreasing multipath interference and allow an improved tradeoff between lateral resolution and depth performance/distance range. The higher optical power within a spot 318 compared to a (binned) flood illumination may provide better depth noise and less multi-path interference.

The ToF camera 300 may, for instance, illuminate the scene 316 with a spot pattern of 500 to 4000 spots 318, contrasting flood illumination based iToF cameras with 40.000 pixels (HQVGA, High Quality Video Graphics Array) or up to 300.000 pixels (HVGA, Half Video Graphics Array).

One or more of the following technologies for the optical spot illuminator (first optical element 312) may be used: 1) Lens-based spot projectors where a lens is used to project the respective light of the VCSEL emitters onto the scene 316. For instance, a one-to-one correspondence between light spots 318 and VCSELs may be implemented. This may increase the contrast and efficiency of the camera 300. 2) DOE-based spot replicators where a DOE is used to replicate the light of VCSEL emitters in, for example, a 3x3 replication pattern. An advantage of the latter may be the higher numbers of spots 318 (e.g., up to 4000) that can be generated. 3) MLA where a Talbot/Lau effect is made use of to project the light of the VCSEL emitters onto the scene 316, while several emitters contribute to the intensity of one spot. This may increase the efficiency compared to DOE elements and decrease the cost compared to lens-based projectors. 4) Meta-optical surfaces that allow the projection of different spot patterns more efficiently than the previous methods.

The imager 320 is configured to receive a reflection 324 of light emanating from the scene 316. The ToF camera 300 further comprises a second optical element 322 (imaging lens(es), meta-optical surface) in a receive path of the ToF camera 300, e.g., in front of the imager 320.

Generally, a spacing between the light source and the imager of the ToF camera, such as the spacing (so called baseline) 240 or 340 illustrated by Fig. 2 or Fig. 3, may cause a so-called parallax. This is a phenomenon that occurs due to a changing perspective from light source to imager. The parallax refers to an apparent shift or displacement of at least a part of an image of the scene generated by the ToF camera, i.e., a shift of a distribution of light intensity (amplitude) values of the received light over a plurality of pixels of the ToF camera. For example, the parallax may manifest in a shift of a light spot in the image. The shift depends on the spacing between light source and imager as well as on the distance to a part of the scene. Thus, the shift indicates the distance to said part of the scene.

The apparatus 100 may make use of said parallax for updating the above-mentioned provisional distance value. The apparatus 100 may, for instance, use the parallax for resolving a range ambiguity of the provisional distance and/or for improving an accuracy or precision of the provisional distance value, as explained further below. To make use of the parallax, the processing circuitry 110 is configured to determine at least one value characterizing the parallax caused by the spacing between the light source and the imager of the ToF camera. The at least one value characterizing the parallax is determined based on measurement data of a ToF measurement performed by the ToF camera and at least one reference value indicating the parallax. For example, the measurement data may indicate a measured distribution of amplitude values over the plurality of pixels and the processing circuitry 110 may be configured to determine the at least one value characterizing the parallax by determining a difference between the measured distribution and a reference distribution (indicated by the reference value). In some examples, a plurality of parallax characterizing values may be determined, each corresponding to a certain part of the illuminated scene, and each may be compared to a respective reference value for that part of the scene. The characterizing values and corresponding reference values may be mapped according to their proximity to each other on the image plane (e.g., in a pixel coordinate system).

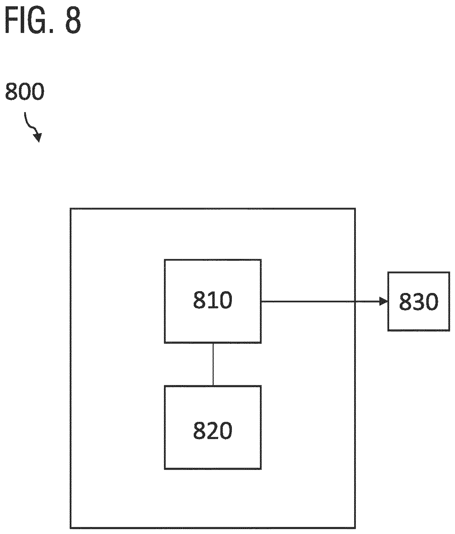

The reference value refers to a known quantity (e.g., estimated once for the sensor/camera as a last calibration step after production in the factory or a camera calibration prior to the measurement/operation) that serves as a basis for comparison when determining or interpreting parallax effects. ToF cameras are conventionally calibrated either in the factory or prior to the measurement, thus this additional step to determine the reference value is just an additional data acquisition that can be done with the existing calibration setup or may need additional calibration targets. It provides a point of reference against which an observed displacement in the measurement data can be determined. The reference value may be provided by a reference measurement with a known distance to the scene. By comparing parts of the measurement data and the reference value, a distance to the corresponding part of the scene can be determined using trigonometric principles. For example, the at least one reference value may indicate a reference distribution of amplitude values over a plurality of pixels of the ToF camera for at least one (known or reference) distance. An example of how the reference value can be determined is explained below with reference to Fig. 8.

The said value characterizing the parallax may be any value determining an extent of the parallax, e.g., of a particular point or part of the object space (scene). For instance, this value may indicate an apparent shift or change in position of one or more certain light intensity value over the pixels relative to a reference position of the light intensity value captured with a known distance to that part of the scene. This value may be, e.g., dimensionless and indicate a proportion related to the reference value, it may be in degrees for quantifying an angular separation to the reference position or may indicate a distance of the particular part of the scene to its reference position. Additionally or alternatively, any method may be used to determine a deviation of the measured light intensity distribution to a reference distribution, e.g., using a mathematical function or a geometrical model. This deviation may be or may be indicated by the value characterizing the parallax.

In case of structured light, the light pattern on the scene may be divided into subparts, such as individual spots (or dots) in case of spot illumination, crosses or lines in case of grid illumination, wave segments in case of sinusoidal patterns, etc. Thus, the measured distribution may comprise sub-distributions of amplitude values corresponding to respective structural elements (spots, rectangles, lines, etc.) of a pattern of the structured light measured by the ToF camera. The processing circuitry 110 may then be configured to determine the value characterizing the parallax by determining a difference between at least one of the sub-distributions and the reference distribution. For example, for each sub-distribution, a respective individual reference value may be used to determine the parallax.

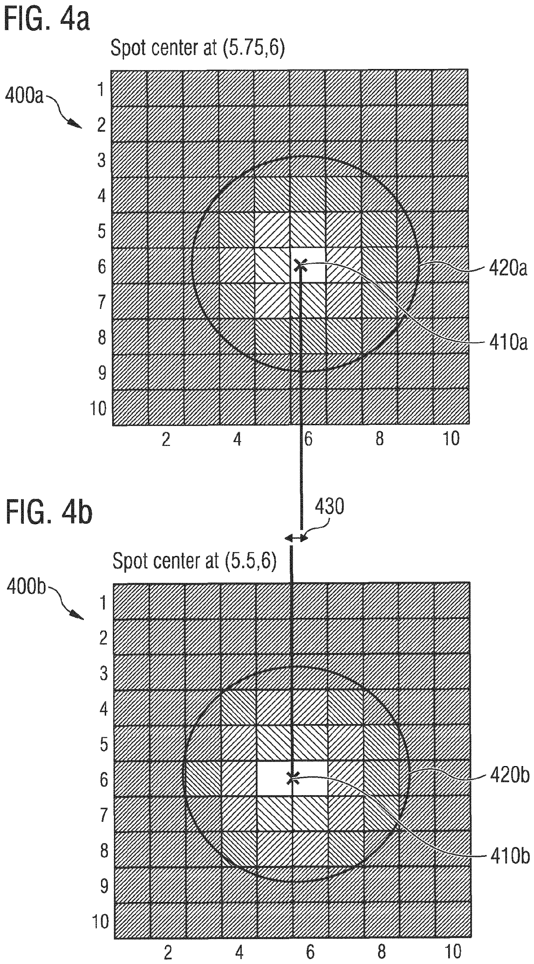

In case of spot illumination, a position or distribution of a spot on the pixels (e.g., within the pixel coordinate system) may be compared to a reference position or distribution of that spot on the pixels. A deviation of the observed spot from its reference position may be indicated by the value characterizing the parallax. For spot illumination, the above-mentioned sub-distributions correspond to respective intensity distributions of spots of the spot pattern. An example of a value 430 characterizing a parallax for spot illumination is illustrated by **Fig. 4a** and **Fig. 4b.** Fig. 4a and Fig. 4b show an example of a measured distribution 400a of amplitude values over a plurality of pixels of an imager of a ToF camera and an example of a reference distribution 400b of amplitude values over the plurality of pixels, respectively. The distributions 400a, 400b are indicated by a grid like illustration (pixel coordinate system) of the plurality of pixels. The amplitude values are illustrated based on a grey scale - darker pixels correspond to lower amplitude values; brighter pixels correspond to higher amplitude values.

The distributions 400a, 400b show respective light spots 420a, 420b. The light spots 420a, 420b are localized or concentrated areas of brightness (or high light amplitude values) on the plurality of pixels where light is more intense compared to the surrounding areas. The light spots 420a, 420b have respective amplitude peaks 410a, 420a which are substantially in their central pixel. Peak 410a is located at 5,75 / 6 in the pixel coordinate system, and peak 410b is located at 5,5 / 6 in the pixel coordinate system. Starting from these peaks 410a, 410b, the amplitude values decrease outwardly.

In the example of Fig. 4a and Fig. 4b, a reference value for determining the parallax may be or indicate a reference position for the peak 410b of the reference distribution 400b with respect to the plurality of pixels (e.g., coordinates of the peak 410b). The value 430 characterizing the parallax may be determined by determining a position of the peak 410a of the measured distribution 400a of the amplitude values with respect to the plurality of pixels and determining a difference between the position of the peak 410a and the reference position 410b. The peak 410a may be determined using any peak determination technique. Generally, for structured light, a position of a peak of a sub-distribution may be determined by correlating the sub-distribution with a predefined distribution of amplitude values assumed for the structural elements of the pattern. In case of the spot 420a, a round shaped distribution may be assumed. This shape may be modelled mathematically and correlated with (or superimposed on) the measured distribution 400a to find the peak 410a.

The value 430 characterizing the parallax may be determined based on a distance between the peak 410a and the peak 410b, indicating the shift caused by the parallax. In other examples than the one shown in Fig. 4a and Fig. 4b, any other characteristic but the peak may be used to compare the measured distribution 400a and the reference distribution 400b, e.g., a boundary point or boundary segment of the spots 420a, 420b, a mean value or quantile of the distributions 400a, 400b, or alike.

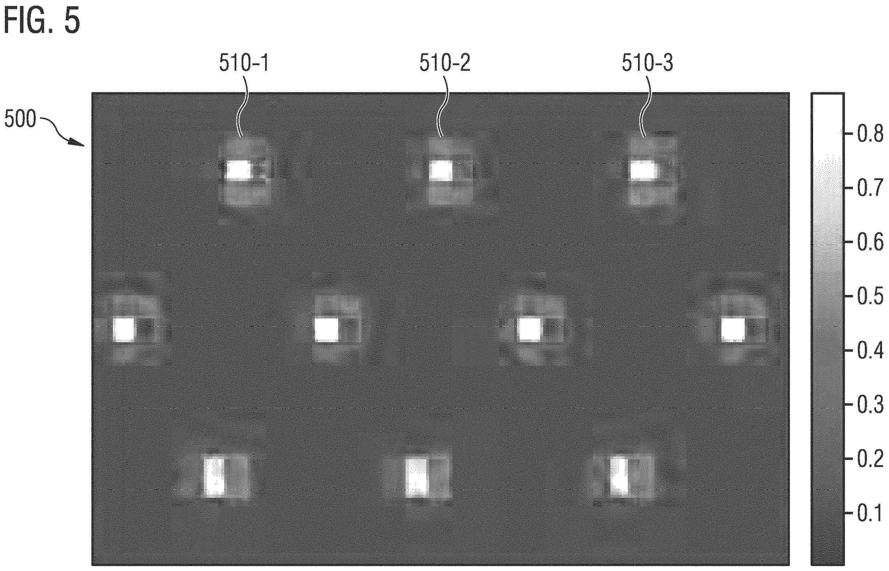

**Fig. 5** illustrates an example of a measured distribution 500 of amplitude values over a plurality of pixels of an imager of a ToF camera. In Fig. 5, a spot pattern of structured light is shown, i.e., the measured distribution 500 comprises sub-distributions of amplitude values. In Fig. 5, these sub-distributions, such as sub-distributions 510-1, 510-2, 510-3, correspond to respective structural elements, here: spots, of the spot pattern of structured light measured by the ToF camera. For determining a parallax, a respective characteristic value such as a peak of each of the spots may be compared to a respective reference value.

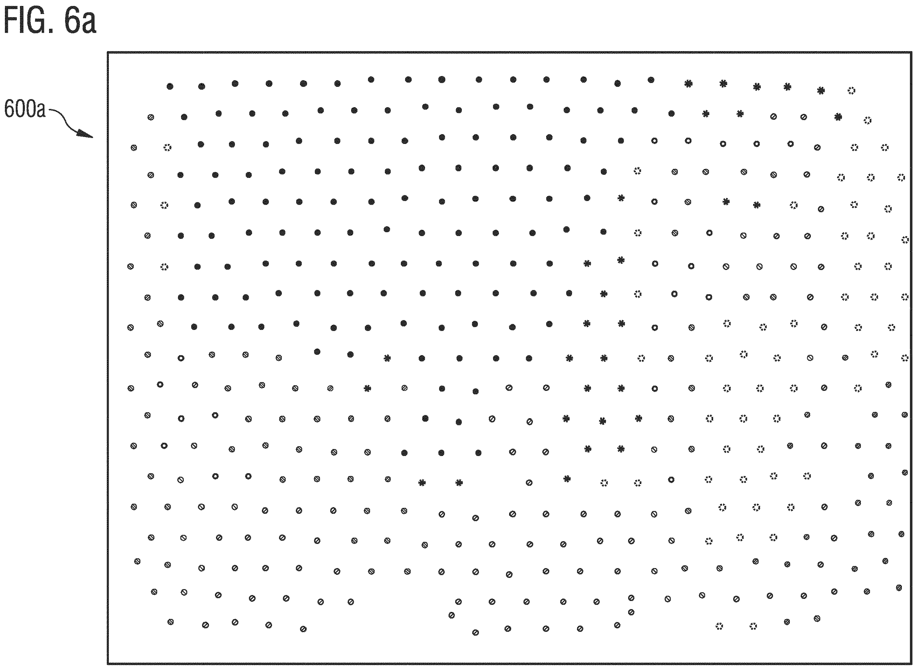

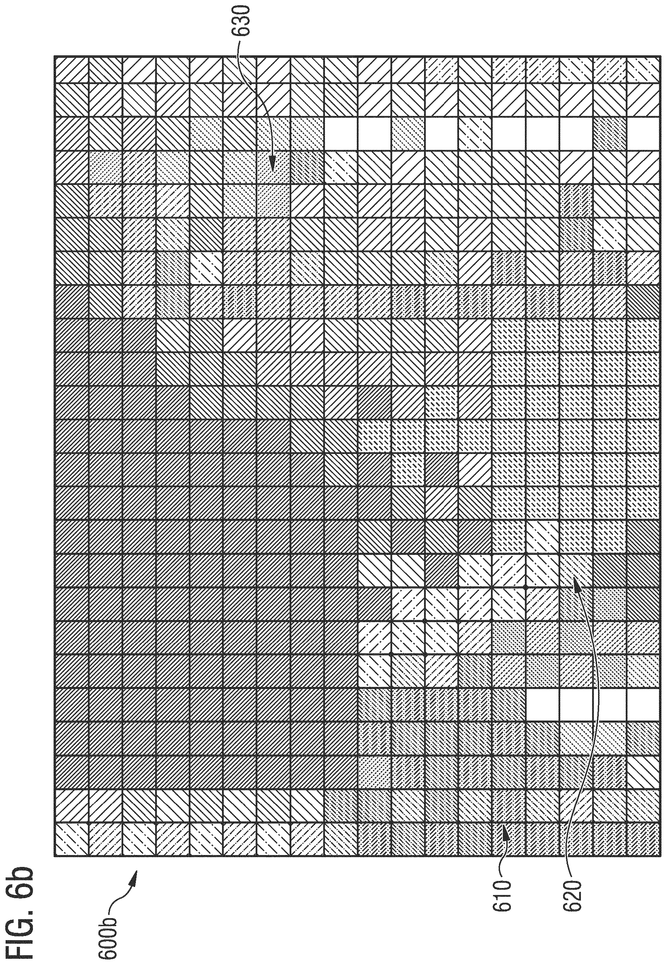

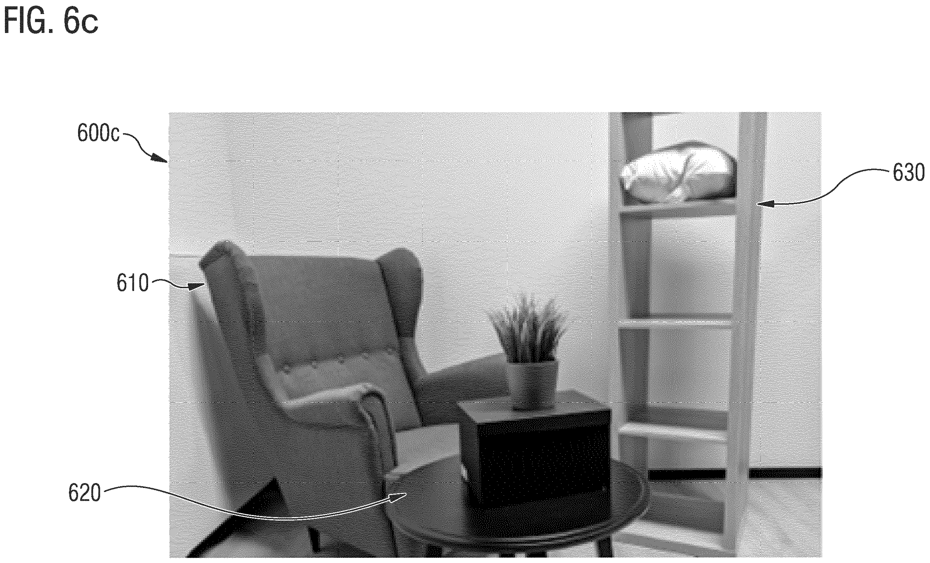

Such a spot pattern as shown in Fig. 5 may be used to determine a respective provisional distance value for each of the spots using a ToF technique. For instance, each of the sub-distributions of the spot pattern may be associated with a respective distance value by measuring the ToF or the phase shift of light. This is illustrated by **Fig. 6a** which shows an example of a depth map 600a associating spots of a spot pattern measured by a ToF camera with a respective distance value. The distance value is indicated by a grey scale coloring of the spots: brighter spots may indicate a closer object; darker spots may indicate a more distant object. The depth map 600a may be used to reconstruct an image of a field of view of the ToF camera, e.g., by using interpolation, point cloud reconstruction or alike. For the depth map 600a of Fig. 6a, an example of a reconstructed image 600b is illustrated by **Fig. 6b.** The image 600b is a 3D illustration of a scene captured by the ToF camera: it shows the rough shape and layout of a chair 610, a table 620 with a plant and a shelf 630. As a reference, **Fig. 6c** illustrates an optical image 600c of the scene showing the chair 610, the table 620 with the plant and the shelf 630.

The technique described herein may likewise be applied to any other illumination type: For a flood or area illumination of the scene, the position of an edge or center of the light cone may be compared to a reference position of this edge or center for a known distance to the scene. The value characterizing the parallax may be determined based on that comparison, e.g., by determining a deviation between the two positions. Generally, an illumination pattern of any shape (e.g., pattern of rectangles or ellipses, or a grid-like pattern) may be used, a position or distribution of a characteristic value of that illumination pattern (or part thereof) may be determined, e.g., a center, an edge, etc. of the pattern (or the part thereof), or a peak or other statistical measure (e.g., percentiles, mean) of the corresponding light intensity distribution or alike. This characteristic value may be used for comparison to a reference value in order to determine the parallax.

The processing circuitry 110 is further configured to determine an updated distance value 130 for the determined provisional distance value for the ToF measurement based on the determined at least one value characterizing the parallax. For example, the parallax-characterizing value may be used to determine one or more distance or range value based on the parallax and resolve a range ambiguity of the ToF measurement or improve accuracy of the ToF measurement based on that distance value.

The apparatus 100 may provide a novel ToF-parallax distance determination (e.g., for spot iToF technologies) using, on the one hand, the imager-illuminator baseline induced parallax shift and, on the other hand, ToF measurements. The apparatus 100 may determine two distance values, e.g., with one and the same measurement data. Thus, the measurement data of the ToF measurement may be re-used for parallax determination. The additional distance value may enable phase unwrapping for improved ambiguity resolution, it may enable an accuracy increase or higher reliability of the measurement (e.g., due to redundant measurements).

The processing circuitry 110 may be configured to output the updated distance value 130. The output updated distance value 130 may be further processed by external circuitry.

ToF systems such as spot iToF may, in many scenarios, operate with a constrained power budget limiting exposure time and optical power. Additional constraints may be given by eye safety limits, thus, it is in some cases not feasible to increase optical power and/or exposure time to improve measurement range and/or depth noise performance. Conventional spot iToF systems use two or more modulation frequencies (frequency schemes) as a compromise to provide both small depth noise and large measurement range. By contrast, the apparatus 100 may overcome this limitation: A single-frequency ToF measurement may be sufficient to deliver the required depth noise performance, the ambiguity of the single-frequency ToF measurement may be resolved by exploiting the parallax, e.g., causing a spot center shift in spot illumination, due to the baseline between imager and VCSEL illumination. This may allow for power savings, reduced motion blur and, hence, better measurement data. However, the apparatus 100 is not limited to using a single-frequency ToF measurement. In some examples, the apparatus 100 may use light with multiple modulation frequencies instead of light with a single modulation frequency.

The apparatus 100 may, for example, maintain the same power consumption for RX (light source) and TX (imager) as in a classical ToF case - then, the exposure time can be doubled without exceeding the eye safety limit providing twice the signal strength on pixel level, $\sqrt{2}$ depth noise improvement and $\sqrt{2}$ distance range improvement, a reduction to 4x readouts and a reduction of motion artifacts. The apparatus 100 may, alternatively, maintain the same performance (distance range/depth noise) as in a classical ToF case - then, the power consumption may be reduced to $1/\sqrt{2}$ (RX power consumption + TX power consumption) with a single modulation frequency only. In both cases, the processing power may be lowered under the assumption that, e.g., the (sub-)pixel spot center detection consumes less power than depth processing for the omitted second frequency measurement. Correlating or combining ToF depth estimate with the parallax determination (e.g., using the spot center shift) may contribute to an additional depth performance gain. Alternatively, any other operation point of power consumption and performance may be set for the apparatus 100: a higher performance relative to the power consumption may be nevertheless achievable with the technique proposed herein, and a multi-frequency measurement may be omitted. The apparatus 100 may be easy to implement as it requires software but no hardware adaptation of conventional ToF systems. Increasing the mechanical baseline may further improve the accuracy.

For implementing phase unwrapping, i.e., for resolving a range ambiguity of the ToF measurement, the processing circuitry 110 may be further configured to determine a distance interval based on the determined at least one value characterizing the parallax. For example, the ToF measurement may be an indirect ToF measurement, resulting in raw measurement data indicating wrapped or modulo $2\pi$ phase values. These phase values may be ambiguous since they show discontinuities when a specific range (defined by a wavelength of the emitted light) is exceeded. Thus, the phase values are not directly mappable to a distance. Instead, they need to be converted into continuous or unwrapped phase values.

The value characterizing the parallax may be used to determine which so-called ambiguity range interval (distance interval) the phase value belongs to in order to unwrap it. The processing circuitry 110 may then determine the updated distance value 130 from the distance interval for resolving a range ambiguity of the determined provisional distance value. That is, the processing circuitry 110 may associate the provisional distance value to the distance interval derived from the parallax determination. In this way, the range ambiguity may be resolved and no additional measurement with a different modulation frequency is needed.

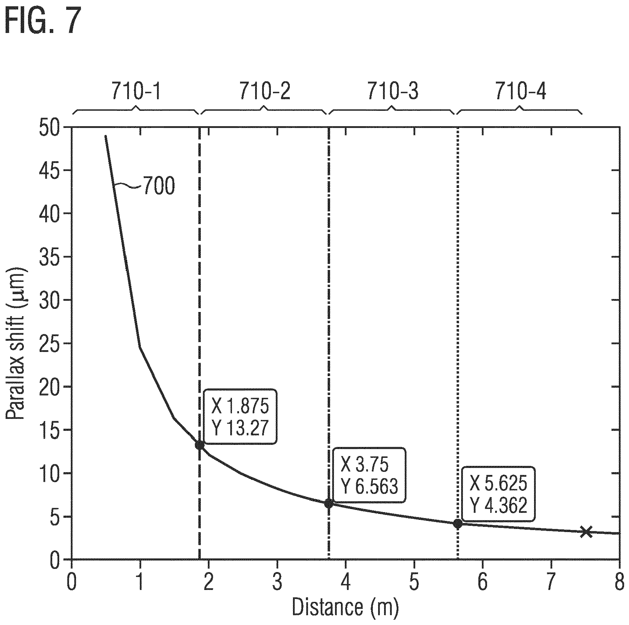

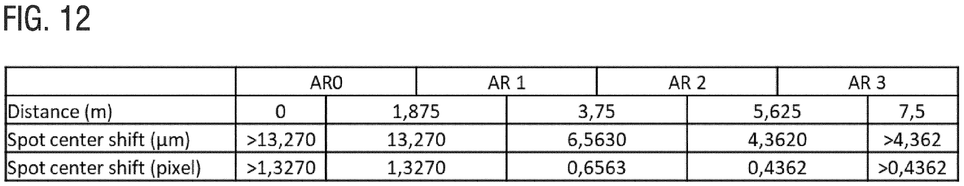

The range resolution is illustrated by Fig. 7. **Fig. 7** shows a diagram of an example of a value 700 characterizing the parallax (in Fig. 7, this is a parallax shift in micrometers) over a distance (in meters) to an object to be captured. The parallax shift 700 decreases exponentially from about 50 micrometers to about 4,3 micrometers over a distance from 0 to 7,5 meters. The distance dimension of the diagram is divided into regular distance intervals 710-1 to 710-4 corresponding to the $2\pi$ ambiguity range and multiples thereof. The distance intervals 710-1 to 710-4 (AR0 to AR3) are further described by the table in Fig. 12. This table specifies the minimum and maximum values of the distance and the minimum and maximum values of the parallax shift 700 for the distance intervals 710-1 to 710-4. In Fig. 12, the parallax shift 700 is described as spot center shift in micrometers and in pixels. Sub-pixel spot center peak fitting may allow a 0,1-pixel accuracy. A handover between AR 2 and AR 3 may require a resolution of 4,36 micrometers (~0,4 pixel) for the parallax shift 700.

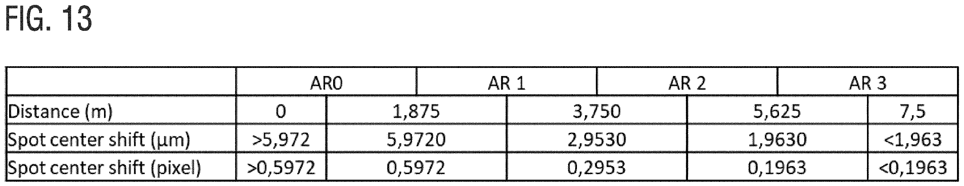

The specific values of the parallax shift 700 and their course over the distance dimension depends on the type and setting of the ToF camera which has captured the ToF measurement data from which the parallax shift 700 is derived. In the example of Fig. 7, the ToF camera may have made a ToF measurement with an 80-Megahertz single frequency and an AR (ambiguity range) of 1,875 meters. The baseline between an imager and a light source of the ToF camera may be 10 millimeter. An example of values of a parallax shift and associated distance values for a 4,5-millimeter baseline is specified by the table in Fig. 13.

A ToF camera system, e.g. for robotics, could be improved using the presented parallax depth measurement scheme to improve the depth precision (depth noise) of the existing hardware. Existing ToF cameras very often suffer from poor depth precision and accuracy in the close range (e.g., between 2 cm and 30 cm) due to systematic properties of the camera. Exploiting the parallax shift improves bot accuracy and precision in this range and would allow to use unchanged camera hardware by only changing the software/algorithms used (and the calibration scheme). Similarly, the presented parallax depth measurement scheme may be used in AR/VR headsets for eye tracking measurements to improve depth precision and accuracy in the close range.

The update of the distance value may generally depend on the target application, e.g., on whether the parallax is used for phase unwrapping as described above or, e.g., for increasing an accuracy of the ToF measurement. For the latter, the processing circuitry 110 may be configured modify the provisional distance value based on the parallax, e.g., by determining a second distance value for the parallax and taking a mean with optional weighting of the provisional and the second distance value or alike. In some examples, the processing circuitry 100 may determine the updated distance value 130 by correlating a second distance value associated with the determined at least one value characterizing the parallax with the determined provisional distance value. Correlating refers to measurement of a similarity or a relationship between the two distance values. Cross-correlation or normalized cross-correlation may be used to align or match the two distance values, yielding the updated distance value 130.

The provisional distance value may be determined, e.g., by external processing circuitry, and may be received via the interface circuitry 110. Alternatively, the apparatus 100 may determine the provisional distance value itself. For example, the processing circuitry 100 may be further configured to determine the provisional distance value based on the measurement data. In case of an indirect ToF technology, the measurement data may indicate a plurality of phase images of the light measured by the ToF camera. The processing circuitry 110 may determine the provisional distance value based on said plurality of phase images.

For an indirect ToF approach, light is emitted with a periodic or modulated pattern, and a phase shift is determined for the return reflection of the light. The imager of the ToF camera may comprise two or more detectors, wells or charge storages (also called buckets) that receive photons and turn them into an electric signal (or charge). Each well can be opened or closed by a sensor control circuit of the ToF camera. The wells may be kept open for in an asynchronous manner, e.g., one of them half of a modulation period and another one for the other half of the modulation period. Then, the returning photons may be split between the two detectors. Based on a proportion of photons that accumulate in the detectors, the phase shift of the returned signal may be determined. A phase image may comprise phase values of these detectors for a specific reference signal applied to the wells (e.g., in-phase or 90° out of phase relative to the emitted modulation signal). A phase image may correspond to the phase values of one so-called readout of the electrical charge. Different phase images may be measured for different reference signals to reduce ambiguities of the phase values.

Optionally, the measurement data may be preprocessed: The processing circuitry 110 may determine the provisional distance value by compensating at least one of a fixed-pattern noise, a fixed-pattern phase noise, a sensor non-uniformity, a dark noise, a thermal noise, a wiggling error, a temperature-related error, stray light error and a multi-path interference error in the measurement data.

Fixed-pattern noise refers to (over time) consistent variations in the imager response that occur across the pixels, leading to an uneven background in the depth map. Compensation may involve subtracting a fixed-pattern noise map from the measurement data to remove this pattern and obtain a more uniform result. Fixed-pattern phase noise refers to variations in the phases across the pixels which cause distortions in the phase images. Compensation may involve applying correction factors to phase values to mitigate this noise. Sensor non-uniformity refers to non-uniform responses across the physical pixels of the imager. Compensation may involve applying correction factors to each pixel's data to account for the non-uniformity. Dark noise refers to the random variations in amplitude levels even when no light is present. Calibration measurements with no light may be used to estimate the dark noise level, which can then be subtracted from the measurement data.

Thermal noise is a result of the random motion of electrons in the imager's electronic components. A wiggling error is caused when the modulation of the light source is not exactly sinusoidal. The wiggling error can be compensated using state-of-the art wiggling correction techniques measuring one or more (known) distances with the sensor. Compensation of motion artefacts may use either temporal filters and/or motion compensation techniques using the alignment multiple frames to remove artifacts. A temperature-related error may be compensated by applying temperature-dependent correction factors to the measurement data. A stray light error such as an error caused by ambient light entering the imager may be compensated using spatial filtering, image fusion of multiple frames, stray light modeling or alike. A multi-path interference error occurs when light reflects off multiple surfaces before reaching the imager. Compensation methods may involve physical models simulating the behavior of light reflections in a scene, temporal or spatial analyses of the measurement data, the use of calibration factors, frequency space techniques (such as Fourier or DCN transformations) or alike.

The processing circuitry 110 may be configured to determine the provisional distance value by determining a combined amplitude of the measured distribution (or for sub-distributions thereof). In a specific example, the measurement data may be raw data comprising a single-frequency measurement with four phase images A0, A1, A2, A3, e.g., 0°, 90°, 180° and 270° out of phase images. The processing circuitry 110 may determine an amplitude for spot pixel areas (e.g., 3x3 or 4x4 neighborhood), which yields a combined amplitude $A = \sqrt{((A3-A1)^2+(A0-A2)^2)}$.

The processing circuitry 110 may further determine a position of a peak of the measured distribution with respect to the plurality of pixels. For instance, coarse spot centers $(x_i, y_i)$ may be determined for each spot. The processing circuitry 110 may be configured to determine the provisional distance value based on at least one of pixel neighborhood processing, amplitude weighting and spot processing. Pixel neighborhood processing refers to a technique where the values of a pixel and its neighboring pixels are used to calculate new values for the central pixel. This approach may take advantage of the spatial relationships between nearby pixels to enhance or modify the features of an image. Pixel neighborhood processing may include blurring, sharpening, edge detection, noise reduction, or texture analysis. Amplitude weighting is a technique where the values of an image are multiplied by specific weights or coefficients to emphasize or de-emphasize certain components of the amplitude distributions. Amplitude weighting can be applied to pixels within a certain pixel area (e.g., such areas corresponding to spots) to highlight them or to reduce noise. Spot Processing refers to the manipulation or analysis of specific localized regions, e.g., spots, on the pixels. Spot processing may involve filtering, enhancement, correction, etc. applied to the designated spots in the image.

In the above specific example, the provisional distance value (estimate) d for each spot $(x_i, y_i)$ may be determined for a spot pixel neighborhood $N(A, x_i, y_i)$ as a function of A0, A1, A2, A3, $x_i$ and $y_i$. Optionally, amplitude weighting or other techniques may be used (e.g., static, dynamic or pseudo-dynamic spot processing). Then, a sub-pixel accurate spot center (peak of the sub-distributions) may be determined $x_i'$, $y_i'$) based on coarse spot centers from the previous ToF processing. A depth dependent relative shift s; per spot center on the pixels may be determined using, e.g., a look-up table generated during calibration of the ToF camera with reference values for the spot center positions. An ambiguity range $AR_i$ may be determined for each spot as a function of the spot center shift $s_i$. The provisional distance estimate d for each spot may optionally be corrected within the selected ambiguity range, as in Equation 1:

$$d'(x_i, y_i) = d(x_i, y_i) + n(AR_i) * AR$$

Equation 1, where d' is the updated distance value, and $AR = c/(2*f_{mod})$ with $f_{mod}$ being the modulation frequency.

In the following, an example of how the reference value may be determined is explained. **Fig. 8** illustrates an example of an apparatus 800 for determining at least one reference value 830 indicating a parallax caused by a spacing between a light source and an imager of a ToF camera. The apparatus 800 may be external to an apparatus as described above, e.g., apparatus 100. Alternatively, the apparatus 800 may be integrated to the apparatus 100. The reference value 830 may, for instance, be determined during a calibration process of the ToF camera.

Such a calibration process may be realized to determine correction values for the above-mentioned pre-processing methods such as compensation of wiggling errors etc.

The apparatus 800 comprises processing circuitry 810 and memory 820. The processing circuitry 810 is configured to determine the at least one reference value 830 based on a reference measurement performed by the ToF camera with at least one distance. For example, the at least one distance may be a maximum distance measurable by the ToF camera, i.e., the reference value 830 may be determined with a measurement in an empty scene. Alternatively, any other know distance may be set to determine the reference value 830, e.g., the ToF camera may be placed into a predefined environment with known distances.

The processing circuitry 810 may determine the reference value 830 by determining a reference distribution of amplitude values over a plurality of pixels of the ToF camera for the at least one distance. In case of structured light, the processing circuitry 810 may determine a respective reference value for a plurality of structural elements of the pattern of the structured light measured by the ToF camera. The reference value 830 may indicate a reference position of a peak of the reference distribution, for instance.

The memory 820 is configured to store data indicating the at least one reference value 830. The apparatus 800 may provide this data to an apparatus for the novel ToF-parallax measurements as explained above. The memory 820 may store the reference value 830 in any data structure, e.g., it may store at least one of a look-up-table, a distribution and a model indicating the reference position.

The apparatus 800 may provide a reference value 830 for parallax determination using ToF measurement data. It may thus enable single frequency ToF measurements (e.g., spot iToF measurements) with high depth noise performance and the possibility to resolve the ambiguity of the ToF measurement by exploiting the spot center shift caused by the baseline between an imager and a light source of the ToF camera.

**Fig. 9** illustrates an example of a ToF system 900. The ToF system 900 comprises an apparatus 910 as described herein, such as apparatus 100 and the ToF camera 920. The ToF camera 920 is configured to perform the ToF measurement by radiating light to a scene by the light source and receiving a reflection of the light by the imager. There may be any spacing between the light source and the imager, for example, a spacing of at least 2, at least 4 or at least 10 millimeter. In some examples, the light source is configured to radiate structured light to the scene.

Although the apparatus 910 and the ToF camera 920 are depicted as separate blocks in Fig. 9, in other examples, the apparatus 910 may in part or in entirety be included in the ToF camera 920, which thus correspondingly includes all or part of the processing circuitry (e.g., processing circuitry 110) of the apparatus 910. In other words, the ToF camera 920 may comprise the apparatus 910.

In case the apparatus 910 is only partially included in the ToF camera 920, the ToF system 900 may include distributed processing circuitry carrying out respective parts of the processing steps, e.g., in the form of first processing (sub-) circuitry included in the ToF camera 920, and second processing (sub-) circuitry external to the camera and in communication with the first processing circuitry through interface circuitry (e.g., interface circuitry 120), for instance, for exchange of data between the first and the second processing circuitry.

In case the apparatus 910 is not included in the ToF camera 920, the processing circuitry may take the form of processing circuitry external to the ToF camera 920 and may be communicatively coupled therewith through interface circuitry.

The ToF measurement may in some examples be based on light with a single modulation frequency. For example, phase unwrapping may be realized using the parallax. Omitting a second modulation frequency may enable an increase in accuracy of the ToF measurement and/or decrease a power consumption of the ToF measurement.

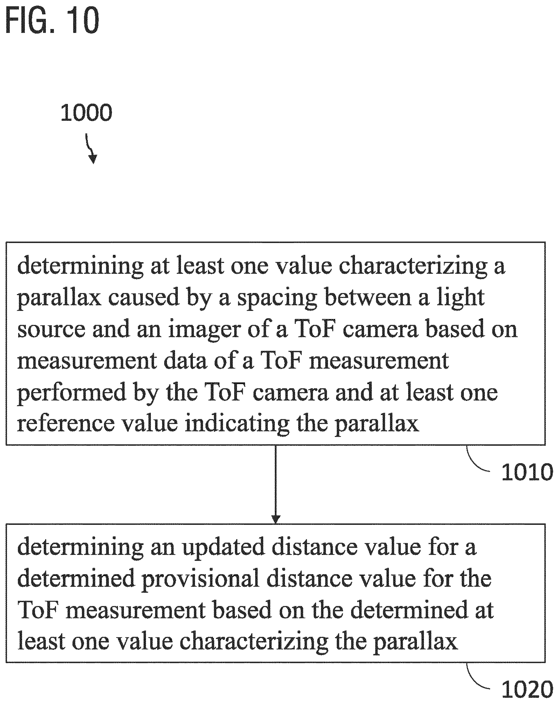

**Fig. 10** illustrates an example of a method 1000. The method 1000 may be performed by an apparatus as described herein, such as apparatus 100. The method 1000 comprises determining 1010 at least one value characterizing a parallax caused by a spacing between a light source and an imager of a ToF camera based on measurement data of a ToF measurement performed by the ToF camera and at least one reference value indicating the parallax. The method 1000 further comprises determining 1020 an updated distance value for a determined provisional distance value for the ToF measurement based on the determined at least one value characterizing the parallax.

More details and aspects of the method 1000 are explained in connection with the proposed technique or one or more examples described above, e.g., with reference to Fig. 1. The method 1000 may comprise one or more additional optional features corresponding to one or more aspects of the proposed technique, or one or more examples described above.

The method 1000 may provide a novel ToF-parallax distance determination (e.g., for spot iToF technologies) using, on the one hand, the imager-illuminator baseline induced parallax shift and, on the other hand, ToF measurements. The apparatus 100 may determine two distance values, e.g., with one and the same measurement data. Thus, the measurement data of the ToF measurement may be re-used for parallax determination. The additional distance value may enable phase unwrapping for improved ambiguity resolution, it may enable an accuracy increase or higher reliability of the measurement.

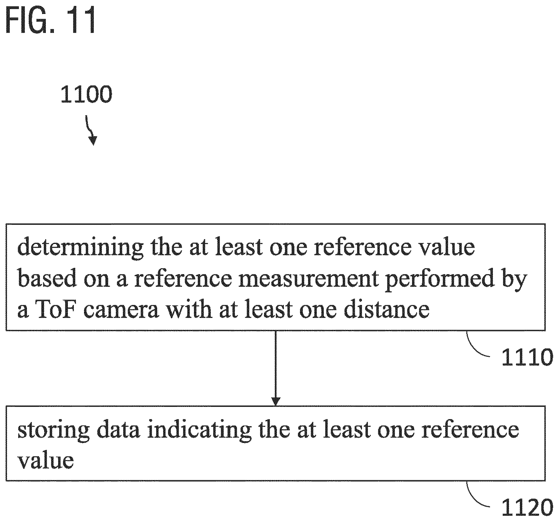

**Fig. 11** illustrates an example of a method 1100 for determining at least one reference value indicating a parallax caused by a spacing between a light source and an imager of a ToF camera. The method 1100 may be performed by an apparatus as described herein, such as apparatus 800. The method 1100 comprises determining 1110 the at least one reference value based on a reference measurement performed by the ToF camera with at least one distance and storing 1120 data indicating the at least one reference value.

More details and aspects of the method 1100 are explained in connection with the proposed technique or one or more examples described above, e.g., with reference to Fig. 8. The method 1100 may comprise one or more additional optional features corresponding to one or more aspects of the proposed technique, or one or more examples described above.

The method 1100 may provide a reference value for parallax determination using ToF measurement data. It may thus enable single frequency ToF measurements (e.g., spot iToF measurements) with high depth noise performance and the possibility to resolve the ambiguity of the ToF measurement by exploiting the spot center shift caused by the baseline between an imager and a light source of the ToF camera.

In the following, some examples of the proposed technique are presented:

An example (e.g., example 1) relates to an apparatus comprising processing circuitry configured to determine at least one value characterizing a parallax caused by a spacing between a light source and an imager of a time-of-flight, ToF, camera based on measurement data of a ToF measurement performed by the ToF camera and at least one reference value indicating the parallax, and determine an updated distance value for a determined provisional distance value for the ToF measurement based on the determined at least one value characterizing the parallax.

Another example (e.g., example 2) relates to a previous example (e.g., example 1) or to any other example, further comprising that the at least one reference value indicates a reference distribution of amplitude values over a plurality of pixels of the ToF camera for at least one distance.

Another example (e.g., example 3) relates to a previous example (e.g., example 2) or to any other example, further comprising that the measurement data indicates a measured distribution of amplitude values over the plurality of pixels, and wherein the processing circuitry is configured to determine the at least one value characterizing the parallax by determining a difference between the measured distribution and the reference distribution.

Another example (e.g., example 4) relates to a previous example (e.g., example 3) or to any other example, further comprising that the measured distribution comprises sub-distributions of amplitude values corresponding to respective structural elements of a pattern of structured light measured by the ToF camera, and wherein the processing circuitry is configured to determine the at least one value characterizing the parallax by determining a difference between at least one of the sub-distributions and the reference distribution.

Another example (e.g., example 5) relates to a previous example (e.g., example 4) or to any other example, further comprising that the at least one of the sub-distributions corresponds to an intensity of a spot of a spot pattern of the structured light.

Another example (e.g., example 6) relates to a previous example (e.g., one of the examples 3 to 5) or to any other example, further comprising that the at least one reference value indicates a reference position for a peak of the reference distribution with respect to the plurality of pixels, and wherein the processing circuitry is configured to determine the at least one value characterizing the parallax by determining a position of a peak of the measured distribution of the amplitude values with respect to the plurality of pixels, and determining a difference between the position of the peak and the reference position.

Another example (e.g., example 7) relates to a previous example (e.g., example 6) or to any other example, further comprising that the processing circuitry is configured to determine the position of the peak by correlating the at least one of the sub-distributions with a predefined distribution of amplitude values assumed for the structural elements of the pattern.

Another example (e.g., example 8) relates to a previous example (e.g., one of the examples 1 to 7) or to any other example, further comprising that the processing circuitry is configured to determine a distance interval based on the determined at least one value characterizing the parallax, and determine the updated distance value from the distance interval for resolving a range ambiguity of the determined provisional distance value.

Another example (e.g., example 9) relates to a previous example (e.g., one of the examples 1 to 8) or to any other example, further comprising that the processing circuitry is configured to determine the updated distance value by correlating the determined at least one value characterizing the parallax with the determined provisional distance value.

Another example (e.g., example 10) relates to a previous example (e.g., one of the examples 1 to 9) or to any other example, further comprising that the processing circuitry is further configured to determine the provisional distance value based on the measurement data.

Another example (e.g., example 11) relates to a previous example (e.g., example 10) or to any other example, further comprising that the measurement data indicates a plurality of phase images of light measured by the ToF camera, and wherein the processing circuitry is configured to determine the provisional distance value based on the plurality of phase images.

Another example (e.g., example 12) relates to a previous example (e.g., one of the examples 10 or 11) or to any other example, further comprising that the processing circuitry is further configured to determine the provisional distance value by compensating at least one of a fixed-pattern noise, a fixed-pattern phase noise, a sensor non-uniformity, a dark noise, a thermal noise, a wiggling error, a temperature-related error, stray light error and a multi-path interference error in the measurement data.

Another example (e.g., example 13) relates to a previous example (e.g., one of the examples 10 to 12) or to any other example, further comprising that the processing circuitry is configured to determine the provisional distance value by determining a combined amplitude of the measured distribution, and determining a position of a peak of the measured distribution with respect to the plurality of pixels.

Another example (e.g., example 14) relates to a previous example (e.g., one of the examples 10 to 13) or to any other example, further comprising that the processing circuitry is configured to determine the provisional distance value based on at least one of pixel neighborhood processing, amplitude weighting and spot processing.

An example (e.g., example 15) relates to an apparatus for determining at least one reference value indicating a parallax caused by a spacing between a light source and an imager of a time-of-flight, ToF, camera, the apparatus comprising processing circuitry configured to determine the at least one reference value based on a reference measurement performed by the ToF camera with at least one distance, and memory configured to store data indicating the at least one reference value.

Another example (e.g., example 16) relates to a previous example (e.g., example 15) or to any other example, further comprising that the processing circuitry is configured to determine the at least one reference value by determining a reference distribution of amplitude values over a plurality of pixels of the ToF camera for the at least one distance.

Another example (e.g., example 17) relates to a previous example (e.g., example 16) or to any other example, further comprising that the processing circuitry is configured to determine a respective reference value for a plurality of structural elements of a pattern of structured light measured by the ToF camera.

Another example (e.g., example 18) relates to a previous example (e.g., one of the examples 16 or 17) or to any other example, further comprising that the at least one distance is a maximum distance measurable by the ToF camera.

Another example (e.g., example 19) relates to a previous example (e.g., one of the examples 16 to 18) or to any other example, further comprising that the processing circuitry is configured to determine the at least one reference value by determining a reference position of a peak of the reference distribution.

Another example (e.g., example 20) relates to a previous example (e.g., example 19) or to any other example, further comprising that the memory is configured to store at least one of a look-up-table, a distribution and a model indicating the reference position.

An example (e.g., example 21) relates to a Time-of-Flight, ToF, system, comprising an apparatus according to a previous example (e.g., any one of examples 1 to 14) or to any other example, and the ToF camera, wherein the ToF camera is configured to perform the ToF measurement by radiating light to a scene by the light source, and receiving a reflection of the light by the imager.

Another example (e.g., example 22) relates to a previous example (e.g., example 21) or to any other example, further comprising that the ToF measurement is based on light with at least one modulation frequency.

Another example (e.g., example 23) relates to a previous example (e.g., one of the examples 21 or 22) or to any other example, further comprising that the spacing between the light source and the imager is at least 2, at least 4 or at least 10 millimeter.

Another example (e.g., example 24) relates to a previous example (e.g., one of the examples 21 to 23) or to any other example, further comprising that the light source is configured to radiate structured light to the scene.

Another example (e.g., example 25) relates to a previous example (e.g., one of the examples 21 to 24) or to any other example, further comprising that the ToF camera comprises the apparatus.

An example (e.g., example 26) relates to a method comprising determining at least one value characterizing a parallax caused by a spacing between a light source and an imager of a time-of-flight, ToF, camera based on measurement data of a ToF measurement performed by the ToF camera and at least one reference value indicating the parallax, and determining an updated distance value for a determined provisional distance value for the ToF measurement based on the determined at least one value characterizing the parallax.

An example (e.g., example 27) relates to a method for determining at least one reference value indicating a parallax caused by a spacing between a light source and an imager of a time-of-flight, ToF, camera, the method comprising determining the at least one reference value based on a reference measurement performed by the ToF camera with at least one distance, and storing data indicating the at least one reference value.

Another example (e.g., example 28) relates to a non-transitory machine-readable medium having stored thereon a program having a program code for performing the method of example of any one of examples 26 or 27, when the program is executed on a processor or a programmable hardware.

Another example (e.g., example 29) relates to a program having a program code for performing the method of any one of examples 26 or 27 when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. An apparatus (100) comprising processing circuitry (110) configured to:

    determine at least one value (430) characterizing a parallax caused by a spacing (240, 340) between a light source (210, 310) and an imager (220, 320) of a time-of-flight, ToF, camera based on measurement data of a ToF measurement performed by the ToF camera (200, 300) and at least one reference value (830) indicating the parallax; and
    determine an updated distance value (130) for a determined provisional distance value for the ToF measurement based on the determined at least one value (430) characterizing the parallax.

2. The apparatus (100) of claim 1, wherein the at least one reference value (830) indicates a reference distribution (400b) of amplitude values over a plurality of pixels of the ToF camera (200, 300) for at least one distance.

3. The apparatus (100) of claim 2, wherein the measurement data indicates a measured distribution (400a, 500) of amplitude values over the plurality of pixels, and wherein the processing circuitry (110)

is configured to determine the at least one value (430) characterizing the parallax by determining a difference between the measured distribution (400a) and the reference distribution (400b).

4. The apparatus (100) of claim 3, wherein the measured distribution (400a, 500) comprises sub-distributions (510-1, 510-2, 510-3) of amplitude values corresponding to respective structural elements of a pattern of structured light measured by the ToF camera (200, 300), and wherein the processing circuitry (110) is configured to determine the at least one value (430) characterizing the parallax by determining a difference between at least one of the sub-distributions (510-1, 510-2, 510-3) and the reference distribution (400b).

5. The apparatus (100) of claim 4, wherein the at least one of the sub-distributions (510-1, 510-2, 510-3) corresponds to an intensity of a spot of a spot pattern of the structured light.

6. The apparatus (100) of any one of claims 3 to 5, wherein the at least one reference value (830) indicates a reference position (410b) for a peak of the reference distribution (400b) with respect to the plurality of pixels, and wherein the processing circuitry (110) is configured to determine the at least one value (430) characterizing the parallax by:

    determining a position of a peak (410a) of the measured distribution (400a) of the amplitude values with respect to the plurality of pixels; and determining a difference between the position of the peak (410a) and the reference position (410b).

7. The apparatus (100) of claim 6 and claim 4, wherein the processing circuitry (110) is configured to determine the position of the peak by correlating the at least one of the sub-distributions with a predefined distribution of amplitude values assumed for the structural elements of the pattern.

8. The apparatus (100) of any one of the previous claims, wherein the processing circuitry (110) is configured to:

    determine a distance interval based on the determined at least one value (430) characterizing the parallax; and
    determine the updated distance value (130) from the distance interval for resolving a range ambiguity of the determined provisional distance value.

9. The apparatus (100) of any one of the previous claims, wherein the processing circuitry (110) is configured to determine the updated distance value (130) by correlating the determined at least one value (430) characterizing the parallax with the determined provisional distance value.

10. The apparatus (100) of any one of the previous claims, wherein the processing circuitry (110) is further configured to determine the provisional distance value based on the measurement data.

11. The apparatus (100) of claim 10, wherein the measurement data indicates a plurality of phase images of light measured by the ToF camera (200, 300), and wherein the processing circuitry (110) is configured to determine the provisional distance value based on the plurality of phase images.

12. The apparatus (100) of any one of claims 10 or 11, wherein the processing circuitry (110) is further configured to determine the provisional distance value by compensating at least one of a fixed-pattern noise, a fixed-pattern phase noise, a sensor non-uniformity, a dark noise, a thermal noise, a wiggling error, a temperature-related error, stray light error and a multi-path interference error in the measurement data.

13. The apparatus (100) of any one of claims 10 to 12 and any one of claims 3 to 7, wherein the processing circuitry (110) is configured to determine the provisional distance value by:

> determining a combined amplitude of the measured distribution; and
> determining a position of a peak of the measured distribution with respect to the plurality of pixels.

14. The apparatus (100) of any one of claims 10 to 13, wherein the processing circuitry (110) is configured to determine the provisional distance value based on at least one of pixel neighborhood processing, amplitude weighting and spot processing.

15. A method (1000) comprising:

> determining (1010) at least one value characterizing a parallax caused by a spacing between a light source and an imager of a time-of-flight, ToF, camera based on measurement data of a ToF measurement performed by the ToF camera and at least one reference value indicating the parallax; and
> determining (1020) an updated distance value for a determined provisional distance value for the ToF measurement based on the determined at least one value characterizing the parallax.

FIG. 1

100

FIG. 2

# FIG. 3

Spot pattern illuminating the scene

318

316

324

322

312

314

340

RX imaging
lens

TX projection
lens/DOE/MLA

320

iToF imager

VCSEL emitter
array

310

300

## FIG. 4a

Spot center at (5.75,6)

400a

420a

410a

## FIG. 4b

430

Spot center at (5.5,6)

400b

420b

410b

EP 4 685 518 A1

FIG. 5

500

510-1  510-2  510-3

0.8
0.7
0.6
0.5
0.4
0.3
0.2
0.1

19

FIG. 6a

600a

FIG. 6b

EP 4 685 518 A1

## FIG. 6c

600c

610

620

630

# FIG. 7

FIG. 8

800

FIG. 9

900

# FIG. 10

1000

determining at least one value characterizing a parallax caused by a spacing between a light source and an imager of a ToF camera based on measurement data of a ToF measurement performed by the ToF camera and at least one reference value indicating the parallax

1010

determining an updated distance value for a determined provisional distance value for the ToF measurement based on the determined at least one value characterizing the parallax

1020

FIG. 11

1100

determining the at least one reference value based on a reference measurement performed by a ToF camera with at least one distance

1110

storing data indicating the at least one reference value

1120

## FIG. 12

|  | AR0 | | AR 1 | AR 2 | AR 3 |
|---|---|---|---|---|---|
| Distance (m) | 0 | 1,875 | 3,75 | 5,625 | 7,5 |
| Spot center shift (µm) | >13,270 | 13,270 | 6,5630 | 4,3620 | >4,362 |
| Spot center shift (pixel) | >1,3270 | 1,3270 | 0,6563 | 0,4362 | >0,4362 |

FIG. 13

| | AR0 | | AR 1 | | AR 2 | | AR 3 |
|---|---|---|---|---|---|---|---|
| Distance (m) | 0 | | 1,875 | | 3,750 | | 5,625 | 7,5 |
| Spot center shift (µm) | >5,972 | | 5,9720 | | 2,9530 | | 1,9630 | <1,963 |
| Spot center shift (pixel) | >0,5972 | | 0,5972 | | 0,2953 | | 0,1963 | <0,1963 |

EP 4 685 518 A1

Europäisches
Patentamt

European
Patent Office

Office européen
des brevets

**EUROPEAN SEARCH REPORT**

**Application Number**

EP 24 19 0996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/103168 A1 (CACHO PEPE GIL [DE] ET AL) 28 March 2024 (2024-03-28) | 1-15 | INV.<br>G01S7/4915 |
| Y | * figures 2a, 3, 5, 6a, 6b, 9, 10 *<br>* paragraphs [0026], [0047], [0061] - [0064], [0071] - [0075] *<br>* paragraphs [0081] - [0082], [0091] - [0098], [0110] - [0117] * | 8,9 | G01S17/36<br>G01S17/894<br>G01S7/497 |
| | ----- | | |
| X | CN 113 311 451 B (UNIV XI AN JIAOTONG) 16 January 2024 (2024-01-16) | 1-7, 10-15 | |
| Y | * the whole document * | 8,9 | |
| | ----- | | |
| X | US 2020/090355 A1 (HALL MICHAEL [US]) 19 March 2020 (2020-03-19)<br>* figures 4, 5, 6A *<br>* paragraphs [0035], [0036], [0039] - [0051], [0057], [0063] - [0068] * | 1-15 | |
| | ----- | | |

**TECHNICAL FIELDS SEARCHED (IPC)**

G01S

The present search report has been drawn up for all claims

| Place of search | Date of completion of the search | Examiner |
|---|---|---|
| Munich | 16 December 2024 | Rodríguez González |

EPO FORM 1503 03.82 (P04C01)

## ANNEX TO THE EUROPEAN SEARCH REPORT
## ON EUROPEAN PATENT APPLICATION NO.

EP 24 19 0996

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | | Publication date | Patent family member(s) | | Publication date |
|---|---|---|---|---|---|
| US 2024103168 | A1 | 28-03-2024 | CN | 116745646 A | 12-09-2023 |
| | | | EP | 4285154 A1 | 06-12-2023 |
| | | | US | 2024103168 A1 | 28-03-2024 |
| | | | WO | 2022161964 A1 | 04-08-2022 |
| CN 113311451 | B | 16-01-2024 | NONE | | |
| US 2020090355 | A1 | 19-03-2020 | CN | 113016177 A | 22-06-2021 |
| | | | EP | 3850835 A1 | 21-07-2021 |
| | | | JP | 7254903 B2 | 10-04-2023 |
| | | | JP | 2022504010 A | 13-01-2022 |
| | | | US | 2020090355 A1 | 19-03-2020 |
| | | | US | 2021082134 A1 | 18-03-2021 |
| | | | US | 2021383560 A1 | 09-12-2021 |
| | | | WO | 2020055443 A1 | 19-03-2020 |

EPO FORM P0459

For more details about this annex : see Official Journal of the European Patent Office, No. 12/82